**Europäisches Patentamt**

**European Patent Office**

**Office européen des brevets**

(19)

(11) Publication number: **0 084 710**
A2

(12) # EUROPEAN PATENT APPLICATION

(21) Application number: **82306388.8**

(22) Date of filing: **01.12.82**

(51) Int. Cl.³: **A 23 F 5/40,** A 23 F 5/46

(30) Priority: **02.12.81 US 326632**

(43) Date of publication of application: **03.08.83** Bulletin 83/31

(84) Designated Contracting States: **AT CH DE FR GB IT LI SE**

(71) Applicant: **GENERAL FOODS CORPORATION, 250 North Street, White Plains, N.Y. 10625 (US)**

(72) Inventor: **Cale, Kenneth, 9 Kettle Ct., Howell New Jersey 07731 (US)**
Inventor: **Rehman, Warren, R.D. 1 Piennert Road, Flemington New Jersey 08822 (US)**

(74) Representative: **Baillie, Iain Cameron et al, c/o Langner Parry Isartorplatz 5, D-8000 München 2 (DE)**

(54) Method of preventing migration and adherence of powdered fines in soluble coffee.

(57) A method of preventing the migration and adherence of powdered fines to a wall of a jar containing soluble coffee comprises preparing coffee solids particles containing a quantity of oil and combining the same with a soluble coffee, preferably a freeze dried soluble coffee, prior to filling the jar. The coffee solids particle may be a dry aroma substrate which may be aromatized prior to combination with the freeze dried soluble coffee.

EP 0 084 710 A2

Case 2883

## DESCRIPTION
## PREVENTING MIGRATION OF POWDERED FINES

### Technical Field

The present invention relates to preventing the migration and adherence of powdered fines to a wall of a jar containing soluble coffee.  More particularly, the invention involves preparing coffee solids particles containing a quantity of oil and combining the same with the soluble coffee prior to filling the jar.

### Background Art

One of the more common methods of enhancing the aroma of soluble coffee is to plate the coffee with a pure coffee oil or an aroma-enriched coffee oil. For instance, U.S. Pat. No. 3,077,405 to Clinton et al. discloses contacting soluble coffee particles with droplets of aromatized coffee oil whereby the ratio of coffee oil to soluble coffee is controlled to between 1% by weight and 3% by weight aromatized coffee oil.  So too, U.S. Pat. No. 3,148,070 to Mishkin et al. describes plating an aromatized coffee oil onto soluble coffee at a level of from .2% by weight to 1% by weight coffee oil.  A collateral advantage of these prior art methods is that the coffee oil plated particles are tacky and trap powdered fines as they occur in the jar from breakage, etc.  The ability of the plated particles to trap fines prevents said fines' migration and unsightly adherence to the jar wall.

Such prior art has certain drawbacks including the poor flowability of plated coffee particles and the undesirable droplets of oil that can appear on the surface of a liquid beverage prepared from the plated coffee. To overcome the drawbacks, the art establishes that a so-called dry aroma substrate may be used as disclosed in PCT International Publication No. WO 81/01094 to Hudak et al. The dry aroma substrate method lacks the collateral advantage of preventing the migration and adherence of powdered fines to the jar wall. In fact, the dry aroma substrate is itself a fine powder, aggravating the overall problem.

Disclosure of the Invention

An object of the present invention is the prevention of the migration and adherence of powdered fines to a wall of a jar containing soluble coffee. It has now been discovered that preparing coffee solids particles which contain a quantity of oil and combining the same with a soluble coffee permits the object of the invention to be met.

The term "powdered fines" is intended to mean those fine coffee particles which are not retained on a 40 mesh (U.S. Standard Sieve Screen). Said powdered fines are generated by breakage during the handling of the soluble coffee and present the greatest difficulty in the case of freeze dried coffee. The freeze dried coffee fines have the greatest tendency to adhere to the jar wall, creating a negative appearance for the consumer. It is unclear as to why said freeze dried fines adhere to the wall of a glass jar, though an electrostatic

-3-

attraction does not seem to be the cause. In any event, the unsightly appearance of the fines on the jar wall is overcome by this invention. The present invention is not limited to freeze dried soluble coffee but it does find its greatest application for such soluble coffee.

The coffee solids particles which contain a quantity of oil may be soluble coffee particles prepared from a coffee extract to which a quantity of edible oil has been added prior to drying of said extract. Dehydration of the extract is typically carried out by spray drying or freeze drying. Alternatively, the coffee solids particles which contain a quantity of oil may be a dry aroma substrate rather than a typical soluble coffee particle. The use of a dry aroma substrate as the coffee solids particles which contain a quantity of oil is preferred because the dry aroma substrate may provide concurrent aromatization of and prevention of fines migration in the soluble coffee with which it is combined.

The term "dry aroma substrate" is intended to mean aroma carrier particles similar to those described in PCT International Publication No. WO 81/01094 to Hudak et al. An extract containing soluble coffee solids is shock frozen as a fine mist. The frozen particles are freeze dried under gentle conditions, producing microporous particles of soluble coffee solids characterized as having from 3 to 300 microliters of pore space per gram of solids composed of pores having a radius of 150 $\overset{\circ}{A}$ or less. Similarly, the term "dry aroma substrate which contains a quantity of edible oil" is intended to mean a dry aroma substrate produced from an extract containing soluble coffee solids as set out above but which extract also contains a quantity of edible oil.

The dry aroma substrate which contains a quantity of edible oil may be produced from any extract containing both soluble coffee solids and an edible oil. For instance, the dry aroma substrate may be produced from a conventional coffee extract to which an edible oil has been added. The preferred starting material is the liquor entrained in the spent grounds of a commercial coffee percolation column. Said liquor contains the requisite soluble coffee solids but more importantly, the liquor typically contains a quantity of an edible oil, namely coffee oil. The presence of the coffee oil eliminates the additional step of adding an edible oil to the extract. Further, using the liquor entrained in the spent grounds permits recovery of soluble coffee solids which are otherwise wasted in most current commercial soluble coffee processes.

Any one of the edible oils may be used, as the present invention is not limited to coffee oil. A typical vegetable oil such as corn oil or cottonseed oil would be suitable. The use of coffee oil is preferred, however, because it is not desirable to introduce a non-coffee substance into the soluble coffee. Coffee oil has the advantage of being edible and derived from coffee whereas the other oils, while edible, derive from other vegetable sources or perhaps even animal sources.

The quantity of the edible oil in the dry aroma substrate is important because the presence of too much edible oil impairs product quality but if too little edible oil is present, the object of the invention will not be met. It has been found that the dry aroma substrate which contains a quantity of edible oil should contain at least 4% by weight edible oil but should contain less than 25% by weight edible oil. The preferred quantity is between 5% by weight and 6% by weight edible oil in the dry aroma substrate.

Another significant process variable is the level of addition of the dry aroma substrate which contains a quantity of edible oil to the bulk of the soluble coffee product. This level is affected by two considerations. First, the quantity of edible oil contained in the dry aroma substrate will have a bearing on the level at which said substrate is combined with the bulk soluble coffee product. Second, in the typical embodiment of this invention, the dry aroma substrate will both contain a quantity of oil and also be aromatized. As such, the level at which said aromatized dry aroma substrate is combined with the bulk soluble coffee product is affected by the possibly competing aims of preventing powdered fines migration and providing the proper sensory aroma impact to the consumer.

In view of the many variables bearing on the level at which the dry aroma substrate which contains a quantity of edible oil will be combined with the bulk soluble coffee product, it is difficult to state a level which will cover all cases. The invention covers a range of the combination being between 0.1% by weight and 10% by weight dry aroma substrate which contains a quantity of oil. It has been found that combining 1% by weight dry aroma substrate with the soluble coffee is convenient for meeting the objects of this invention when the dry aroma substrate contains roughly 5% by weight edible oil. The preferred combination then, is one which contains the same amount of oil (roughly .05% by weight edible oil) as a dry aroma substrate containing roughly 5% by weight edible oil combined with a soluble coffee at a level of 1% by weight said dry aroma substrate.

It will be observed that the coffee solids particle method was adopted to avoid the pitfalls of plating soluble coffee with oil, yet the present invention calls for incorporation of oil into the soluble coffee. However, the quantities of oil which the two methods incorporate into the soluble product are markedly different. As hereinbefore noted, oil plating typically demands adding between .2% by weight and 3% by weight edible oil to the soluble coffee. It is an advantage of this invention that .05% by weight edible oil is the preferred quantity contained in the soluble product but the object of the invention is nevertheless met.

The coffee solids particles which contain a quantity of oil may be combined with the soluble coffee by any means providing for the gentle mixing of two powders. The two components may be combined prior to the filling of the jar. Alternatively, the coffee solids particles which contain a quantity of edible oil are conveniently co-delivered to a jar as it is being filled with soluble coffee. Whatever means are employed, care must be taken to ensure that the coffee solids particles are sufficiently dispersed in order to provide proper prevention of fines migration.

A typical embodiment of this invention calls for aromatizing the dry aroma substrate which contains a quantity of edible oil prior to combining said dry aroma substrate with the soluble coffee. Methods for aromatizing the dry aroma substrate are set forth in PCT International Publication No. WO 81/01094. The presence of the edible oil does not affect the aroma adsorption properties of the dry aroma substrate. The advantage of this embodiment is that it permits the achievement of two objectives concurrently; the soluble coffee is aromatized and the fines generated during handling are prevented from migrating and adhering to the wall of the jar. It is not necessary to aromatize the dry aroma substrate which contains a quantity of edible oil to meet the object of the present invention, it is merely convenient to do so.

Another possible embodiment of this invention is one in which the coffee solids particles are soluble coffee particles which contain a quantity of oil. For instance, edible oil could be added to a coffee extract such that the soluble coffee produced when said extract is dried would have approximately the same quantity of oil as the dry aroma substrate which contains a quantity of edible oil. The soluble coffee containing the edible oil may be combined with a soluble coffee again, at a level comparable to that at which the dry aroma substrate is added to the soluble coffee. Though this embodiment might meet the object of the present invention, it is not the preferred one.

A third possible embodiment is one wherein the coffee solids particles consist of finely ground roasted coffee particles, which particles naturally contain significant amounts of oil. Said roasted coffee particles typically contain up to 15% by weight edible coffee oil. The higher oil content permits addition of the roasted coffee particles to the soluble coffee at levels as low as .2% by weight to .3% by weight. This embodiment is limited in that the finely ground roasted coffee particles are incapable of being aromatized prior to combination with the soluble coffee, making this method less convenient than the use of a dry aroma substrate which contains a quantity of oil.

Best Mode for Carrying out the Invention
The following examples more fully illustrate certain embodiments of the invention.

Example I
1. Freeze dried soluble coffee was packed in jars under commercial conditions.
2. Freeze dried soluble coffee was plated with coffee oil at a level of .15% by weight coffee oil. The plated freeze dried soluble coffee was packed in jars under commercial conditions.
3. The jars from steps 1 and 2 were placed on a platform vibrating at a frequency of 19 vibrations/sec. for a period of 15 minutes in order to simulate conditions to which the jars would be subject during shipment by truck.
The wall of the jar containing the unplated freeze dried coffee was characterized as very dusty whereas the wall of the jar containing the plated freeze dried coffee was characterized as clear.

Example II
1. The liquor entrained in the spent grounds of a percolator, which liquor contains coffee oil, was collected. Said liquor was made into dry aroma substrate particles containing 5% by weight coffee oil according to the procedure set forth in PCT International Publication No. WO 81/01094. The dry aroma substrate was combined with freeze dried soluble coffee at a level of 1% by weight dry aroma substrate. The combination was packed in jars under commercial conditions.

2.    Freeze dried soluble coffee was plated with coffee oil at a level of .15% by weight coffee oil as a control. The plated freeze dried soluble coffee was packed in jars under commercial conditions.

The jars of 1 and 2 were shipped by truck roughly 2000 miles. The jars were examined immediately after shipment. The jars packed in 1 were comparable in appearance to the jars packed in 2, the control.

CLAIMS

1.    A method of preventing the migration and adherence of powdered fines to a wall of a jar containing a soluble coffee which comprises:

(a)  preparing coffee solids particles which contain a quantity of edible oil;

(b)  combining the coffee solids particles with the soluble coffee;

(c)  filling the jar with the combination from (b).

2.    A process according to claim 1 wherein the coffee solids particles which contain a quantity of oil are a dry aroma substrate which contains a quantity of edible oil.

3.    A process according to claim 2 wherein the dry aroma substrate which contains a quantity of edible oil is produced from a liquor entrained in spent grounds of a commercial coffee percolation column, which liquor naturally contains a quantity of coffee oil.

4.    A process according to claim 2 wherein the dry aroma substrate which contains a quantity of edible oil is produced from an aqueous extract of roasted coffee to which the edible oil has been added.

5.    A process according to claim 4 wherein the edible oil added to the aqueous coffee extract is coffee oil.

6.    A process according to any one of claims 2 to 5 wherein the dry aroma substrate which contains a quantity of edible oil contains between 4% by weight and 25% by weight edible oil.

7.    A process according to any one of claims 2 to 6 wherein the dry aroma substrate which contains a quantity of edible oil is combined with the freeze dried soluble coffee in a proportion of from .1% by weight to 10% by weight dry aroma substrate.

8.    A process according to any one of claims 2 to 7 wherein the dry  aroma substrate which contains a quantity of edible oil is aromatized prior to combination with the freeze dried soluble coffee.

9.    A process according to any one of claims 2 to 8 wherein the dry aroma substrate which contains a quantity of edible oil is co-delivered to the jar with the freeze dried soluble coffee as said jar is filling.

10.    A process according to any one of claims 1 to 9 wherein the soluble coffee is a freeze dried soluble coffee.

11.    A process according to any one of claims 1 to 10 wherein the jar to which the combination is added is a glass jar.

12.    A jar filled with soluble coffee which coffee comprises a combination of coffee solids particularly containing a quantity of edible oils combined with soluble coffee in amount and in a manner adequate to prevent migration and adherence of coffee fines to the walls of the jar.

13.    A jar according to claim 12 wherein the soluble coffee is freeze dried soluble coffee.

14.    A jar according to either of claims 2 and 13 wherein the coffee solids particles which contain a quantity of oil are soluble coffee particles prepared from a coffee extract to which a quantity of edible oil has been added prior to drying of said extract.

15.    A jar according to either of claims 12 and 13 wherein the coffee solids particles which contain oil are dry aroma substrate particles.